# EUROPÄISCHE PATENTSCHRIFT

(11) **EP 2 765 341 B1**
(45) Veröffentlichungstag und Bekanntmachung des Hinweises auf die Patenterteilung: **27.04.2016**
(21) Anmeldenummer: 14000381.5
(22) Anmeldetag: 03.02.2014
(51) Int. Cl.: F16K 31/02, B64G 1/40

(54) **Ventil zum Öffnen einer Fluidleitung**
Valve for opening a fluid conduit
Vanne d'ouverture d'une conduite de fluide

(30) Priorität: 06.02.2013 DE 102013001992
(43) Veröffentlichungstag der Anmeldung: 13.08.2014
(73) Patentinhaber: Airbus DS GmbH, 82024 Taufkirchen (DE)
(72) Erfinder: Killinger, Rainer, Dr, 45569 Recklinghausen (DE); Wolf, Markus, 70173 Stuttgart (DE); Maier, Thomas, 74348 Lauffen (DE)
(74) Vertreter: Häußler, Henrik

(56) Entgegenhaltungen:
- DE-A1- 2 549 060
- US-A- 3 528 449
- US-A1- 2004 040 302

## Beschreibung

Die Erfindung betrifft ein Ventil zum einmaligen Öffnen einer Fluidleitung, insbesondere zum Entlüften eines technischen Systems. Die Erfindung betrifft ferner ein technisches System, insbesondere eine Raumfahrzeugkomponente.

Ventile, welche dazu ausgebildet sind, lediglich ein einziges Mal zu schalten, werden insbesondere in der Raumfahrt häufig eingesetzt. Die Funktion der Ventile besteht darin, ein definiertes Öffnen oder Schließen einer Fluid-Leitung zu einem bestimmten Zeitpunkt sicherzustellen. Die Ventile verfügen hierzu über einen Aktuator. Als Aktuatoren kommen zumeist pyrotechnische Zünder zum Einsatz. Ein Nachteil solcher Aktuatoren besteht darin, dass bei deren Betätigung ein so genannter Pyro-Schock entsteht, der andere Komponenten des technischen Systems schädigen kann. Pyrotechnische Zünder haben in der Regel eine begrenzte zugesicherte maximale Lebensdauer zum Beispiel 8 Jahre. Da Raumfahrzeuge, wie zum Beispiel Kommunikationssatelliten, typischerweise jedoch mehr als 15 Jahre im geostationären Orbit verbleiben, ist eine gesicherte Betätigung des Ventils am Ende der Lebensdauer des technischen Systems nicht gewährleistet.

Gegenwärtig sind einmalschaltende Ventile auf Basis von Wachs-Aktuatoren in der Entwicklung. Bei diesen wird eine vorgespannte Feder in Wachs eingebettet. Durch das verfestigte Wachs wird ein Entspannen der Feder verhindert. Zur Betätigung des Ventils wird das Wachs erhitzt und damit verflüssigt. Durch das verflüssigte Wachs entfällt die Hemmung der Feder und der Aktuator öffnet, zum Beispiel durch Scherkräfte, die Kappe einer Kapillaren. Die Funktion eines solchen Aktuators erfordert das Vorhandensein eines Schermessers.

Aus der US 2004/0040302 A1 ist ein einmalig betätigbarer elektro-pneumatischer Aktuator bekannt. Dieser weist einen steuerbaren Verschluss auf, der zunächst einen ersten Teil eines Gehäuses von einem zweiten Teil des Gehäuses trennt. Im ersten Teil des Gehäuses ist ein unter Druck stehendes Medium enthalten. Nach Ansteuerung des steuerbaren Verschlusses durch Einbringung von Wärme schmilzt das Material des steuerbaren Verschlusses und wird in Richtung des zweiten Teils des Gehäuses gepresst, so dass das im ersten Teil des Gehäuses befindliche Medium in den zweiten Teil des Gehäuses und einen Auslass des Aktuators strömen kann. Der zunächst durch den steuerbaren Verschluss verschlossene Durchgang ist dadurch irreversibel geöffnet.

Aus der DE 25 49 060 A1 ist eine Vorrichtung zur Betätigung eines Verschlussventils bei einem unter Druck stehenden System bekannt. Zur elektrischen Auslösesteuerung ist ein Verschlussstopfen aus einem schmelzbaren Material vorgesehen. In dem schmelzbaren Material ist mindestens ein eine Widerstandswicklung aufweisendes und mit einer elektrischen Versorgungsquelle in Verbindung bringbares Widerstandselement angeordnet. Bei Aktivierung der Versorgungsquelle fließt Strom über die Widerstandswicklung, wodurch das schmelzbare Material zum Schmelzen gebracht wird. Auf diese Weise erfolgt eine Loslösung bzw. Abtrennung des zentralen Stopfenbereichs von dem Rest des Verschlussstopfens. Dadurch ist ein Durchgang zwischen einem Einlass und einem Auslass des Verschlussventils geschaffen.

Aus der US 3,528,449 A ist eine Anordnung bekannt, bei der zwischen einem gasgefüllten Behälter und einem Auslass ein unter Wärmezufuhr seinen Phasenzustand änderbares Verschlussmaterial vorgesehen ist. Die Phasenänderung des Materials des Verschlusses zwischen einem für das Gas undurchlässigen Zustand und einem für das Gas durchlässigen Zustand wird durch Wärmezufuhr und Abkühlung ermöglicht. Die Änderung des Phasenzustands zwischen den beiden Phasenzuständen kann dabei wiederholt vorgenommen werden.

Es ist Aufgabe der vorliegenden Erfindung, ein einmalig zu öffnendes Ventil anzugeben, welches auf kostengünstige und zuverlässige Weise das Öffnen einer Fluidleitung, insbesondere zum Entlüften eines technischen Systems, erlaubt.

Diese Aufgabe wird gelöst durch ein Ventil gemäß den Merkmalen des Patentanspruches 1 und eine Raumfahrtkomponente technisches System gemäß den Merkmalen des Patentanspruches 13. Vorteilhafte Ausgestaltungen ergeben sich aus den abhängigen Patentansprüchen.

Es wird ein Ventil zum einmaligen Öffnen einer Fluidleitung, insbesondere zum Entlüften eines technischen Systems, vorgeschlagen. Das Ventil umfasst einen Einlass zur Verbindung mit der Fluidleitung, einen Auslass und einen steuerbaren Verschluss. Der steuerbare Verschluss ist zwischen dem Einlass und dem Auslass angeordnet und verschließt im nicht angesteuerten Zustand einen Durchgang zwischen dem Einlass und dem Auslass. Der Verschluss umfasst ein Material, welches in Abhängigkeit eines Steuerparameters seinen Phasenzustand ändert, wodurch im angesteuerten Zustand der Durchgang irreversibel geöffnet ist.

Erfindungsgemäß weist der Auslass einen Auslassstutzen mit zumindest einer Öffnung auf, wobei der Auslassstutzen in ein zwischen dem Durchgang und dem Auslass angeordnetes Volumen des Ventils ragt, wobei das durch Ansteuerung verflüssigte Material durch das Volumen aufnehmbar ist und die zumindest eine Öffnung des Auslassstutzens strömungstechnisch durch den Durchgang hindurch mit dem Einlass verbunden ist. Die zumindest eine Öffnung ist hierbei mit einem Ausgang des Auslasses verbunden. Das in einem Gehäuse des Ventils ausgebildete Volumen ist von seiner Größe somit derart bemessen, dass das seinen Phasenzustand ändernde Material bei Erwärmung durch dieses vollständig aufgenommen werden kann. Gleichzeitig ist der Auslassstutzen derart in dem Volumen angeordnet, dass dessen zumindest eine Öffnung durch das Phasenänderungsmaterial nicht verschlossen ist und somit die Verbindung zwischen dem Einlass des Evakuierungsventils zu dem Auslass des Evakuierungsventils sichergestellt ist.

Das erfindungsgemäße Ventil ermöglicht das einmalige Öffnen einer Fluidleitung ohne einen mechanischen Aktuator. Hierdurch kann das Ventil mit geringer Komplexität und dadurch geringen Kosten bereitgestellt werden. Seine sichere Funktion ist über eine Lebensdauer von mehr als 15 Jahren, wie diese in Raumfahrtanwendungen gefordert ist, sichergestellt.

Bei dem technischen System kann es sich beispielsweise um ein Raumfahrtabtriebssystem mit lagerfähigen Treibstoffen handeln. Das vorgeschlagene Ventil kann beispielsweise dazu eingesetzt werden, um Satellitentanks und Satellitenleitungen, welche zur Bereitstellung von Treibstoff und Druckgas dienen, am Ende einer Mission zu passivieren. Hierdurch können bei einem späteren Wiedereintritt des Raumfahrzeugs oder bei Debris-Einschlägen Explosionen verhindert werden.

Gemäß einer zweckmäßigen Ausgestaltung ist die Phasenänderung des Materials (so genanntes Phasenänderungsmaterial) durch Wärmezufuhr herbeiführbar, wobei das Material unter Wärmezufuhr von einem festen in einen flüssigen Zustand übergeht und dadurch den Verschluss öffnet. Um die Phasenänderung des Materials zu erreichen, muss eine so genannte Phasenänderungstemperatur erreicht werden. Das Material wird bevorzugt derart gewählt, dass der Unterschied zwischen einer Umgebungstemperatur bzw. einer Betriebstemperatur des Ventils und der Phasenänderungstemperatur ein unbeabsichtigtes Betätigen des Ventils ausschließt. Eine solche unbeabsichtigte Betätigung könnte sich beispielsweise durch Sonneneinstrahlung oder die Abwärme anderer Komponenten ergeben. Zweckmäßigerweise umfasst das Phasenänderungsmaterial ein Metall oder besteht aus einem Metall. Bevorzugt kommt Indium zum Einsatz, das eine Schmelztemperatur von mehr als 157 °C aufweist und daher die Anforderungen, die in Raumfahrtanwendungen gestellt werden, erfüllt. Der Begriff des Metalls ist weit zu verstehen. Insbesondere sind darunter auch Metalllegierungen zu verstehen.

Gemäß einer weiteren zweckmäßigen Ausgestaltung umfasst der Verschluss eine Heizeinrichtung, die zur Ansteuerung des Verschlusses mittels einer Steuereinrichtung einschaltbar ist. Durch die Heizeinrichtung kann das Material von dem festen Zustand, in dem der Verschluss einen Durchgang zwischen Einlass und Auslass verschließt, in einen flüssigen oder gasförmigen Aggregatszustand gebracht werden, wodurch das einmalige Öffnen des Ventils ermöglicht wird. Die Heizeinrichtung kann als Widerstandsheizung ausgebildet sein. Eine Widerstandsheizeinrichtung ist im Umfeld von Raumfahrtanwendungen beispielsweise bei Hydrazin-Triebwerken bekannt. Eine solche Heizeinrichtung umfasst ein Heizelement, eine Zuleitung und einen elektrischen Anschluss.

In zweckmäßiger Weise ist die Heizeinrichtung in dem Verschluss in räumlicher Nähe zu dem Phasenänderungsmaterial angeordnet. Hierdurch ist sichergestellt, dass die Reaktionszeit zum Ändern des Phasenzustands des Phasenänderungsmaterials kurz ist.

Das Phasenänderungsmaterial verschließt im nicht angesteuerten Zustand des Ventils zumindest einen Durchgangskanal des Verschlusses. Mit anderen Worten bedeutet dies, dass der Verschluss einen oder mehrere Durchgangskanäle aufweist, in denen im nicht angesteuerten Zustand das feste Phasenänderungsmaterial angeordnet ist. Nach dem Ansteuern des Ventils werden der oder die Durchgangskanäle für die Entlüftung des technischen Systems von dem in der Fluidleitung befindlichen Fluid durchströmt.

Gemäß einer zweckmäßigen Ausgestaltung ist in einem Längsschnitt durch den Verschluss bzw. durch das Evakuierungsventil eine Wand des zumindest einen Durchgangskanals zumindest abschnittsweise konisch oder gestuft ausgebildet, so dass das Material durch den im technischen System herrschenden Druck gegen die Wand gepresst wird. Hierdurch ist sichergestellt, dass der im Betrieb des technischen Systems herrschende Druck bei nicht angesteuertem Evakuierungsventil das dichtende Phasenänderungsmaterial nicht verschieben kann, was andernfalls zu Undichtigkeiten des technischen Systems führen könnte.

Der Auslass kann an seinem Ausgang zur Verbindung mit einem Rohr ausgebildet sein. Alternativ kann der Auslass an seinem Ausgang eine Düse umfassen. Die Düse kann hierbei als separates Bauteil mit dem Auslass des Evakuierungsventils verbunden sein. Ebenso könnte der Auslass des Evakuierungsventils derart ausgestaltet sein, dass dessen Ausgang die Form einer Düse hat. In einer weiteren Variante kann der Auslass an seinem Ausgang eine Mehrzahl an Auslässen umfassen, welche ein symmetrisches Entweichen des Fluids, insbesondere bezüglich einer Längsachse des Evakuierungsventils, ermöglichen. Hierdurch ist sichergestellt, dass beim Entweichen des Fluids kein Schubvektor bzw. kein Moment entsteht, das auf das technische System, zum Beispiel einen Satelliten oder ein Raumfahrzeug, wirkt. Eine solche Anordnung wird auch als "Zero-Force-Auslass" bezeichnet.

Zur Begrenzung des Fluiddurchsatzes bei geöffnetem Ventil kann zwischen dem Einlass und dem Verschluss eine Blende angeordnet sein. Diese Blende begrenzt den Querschnitt, durch den das Fluid beim Entlüften des technischen Systems strömen kann. Korrespondierend hierzu kann alternativ oder zusätzlich zwischen dem Auslass und dem Verschluss ebenfalls eine Blende zur Begrenzung des Fluiddurchsatzes angeordnet sein.

Wenn in der vorliegenden Beschreibung von einem Fluid die Rede ist, so ist hierunter sowohl ein flüssiges als auch ein gasförmiges Medium, beispielsweise ein Treibstoff, zu verstehen.

Bei dem technischen System handelt es sich insbesondere um eine Raumfahrzeugkomponente, welche ein wie oben ausgebildetes Evakuierungsventil umfasst. Dabei steht das Medium in der technischen Komponente, solange das Ventil nicht geöffnet ist, typischerweise unter Druck.

Die Erfindung wird nachfolgend näher anhand eines Ausführungsbeispiels in der Zeichnung erläutert. Es zeigen:
- Fig. 1: eine schematische Querschnittsdarstellung eines erfindungsgemäßen Ventils in Gestalt eines Evakuierungsventils,
- Fig. 2: eine schematische Darstellung eines Zero-Force-Auslasses der an einen Auslass des Evakuierungsventils angeordnet werden kann,
- Fig. 3: eine Düse zur Anordnung am Auslass des in Fig. 1 gezeigten Evakuierungsventil,
- Fig. 4: eine schematische Darstellung eines erfindungsgemäßen Evakuierungsventil in einer Seitenansicht, aus der Komponenten einer Heizeinrichtung ersichtlich sind, und
- Fig. 5: eine Ansicht von oben auf das Evakuierungsventil aus Fig. 4.

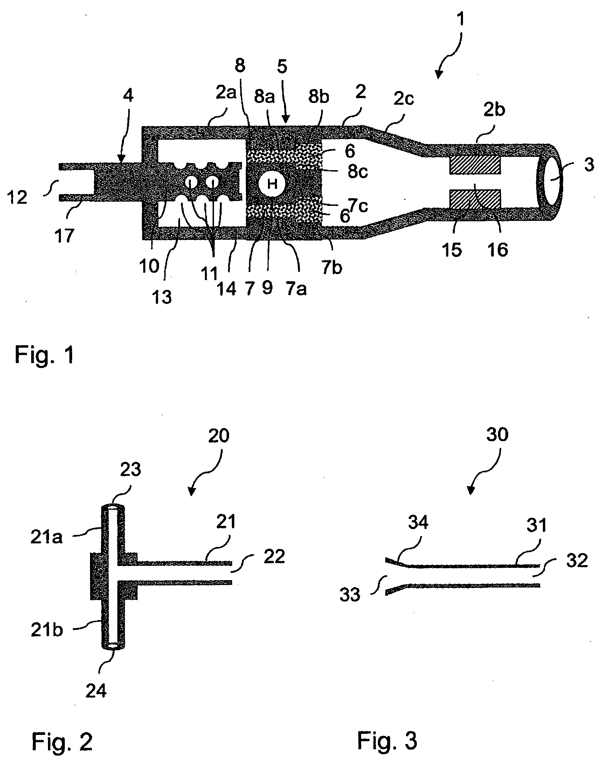

Fig. 1 zeigt eine schematische Querschnittsdarstellung eines erfindungsgemäßen Evakuierungsventils 1. Das Evakuierungsventil (Ventil) 1 umfasst ein Gehäuse 2. Das Gehäuse 2 besteht aus einem ersten Gehäuseabschnitt 2a und einem zweiten Gehäuseabschnitt 2b. Die beiden Gehäuseabschnitte 2a, 2b werden durch einen Verbindungsabschnitt 2c miteinander verbunden. Der erste der zweite Gehäuseabschnitt 2a, 2b weisen beispielsweise einen kreisrunden Querschnitt auf. Der Durchmesser des ersten Gehäuseabschnitts 2a ist im Ausführungsbeispiel größer als der Querschnitt des zweiten Gehäuseabschnitts 2b, wobei dies nicht zwingend ist. Hieraus ergibt sich eine konische Gestalt des Gehäuseabschnitts 2c. Im Ausführungsbeispiel bemisst sich der Durchmesser des zweiten Gehäuseabschnitts 2b nach dem Querschnitt eines Einlasses 3 des Evakuierungsventils 1. An seinem gegenüberliegenden Ende weist das Gehäuse 2 einen Auslass 4 auf. Der Einlass 3 ist mit einer (nicht dargestellten) Fluidleitung eines technischen Systems, beispielsweise eines Raumfahrtantriebs, verbunden. Der Auslass 4 steht strömungstechnisch mit der Umgebung oder einem anderen Leitungssystem oder Behälter in Verbindung.

Zwischen dem Einlass 3 und dem Auslass 4 ist ein steuerbarer Verschluss 5 angeordnet. Der Verschluss 5 weist wenigstens einen Durchgangskanal 7, 8 auf. In der Darstellung der Fig. 1 sind zwei Durchgangskanäle 7, 8 ersichtlich. Zwischen den beiden Durchgangskanälen 7, 8 ist in dem Verschluss eine Heizeinrichtung 9 angeordnet. Die beiden Durchgangskanäle 7 sind mit einem Phasenänderungsmaterial 6 gefüllt. Das Phasenänderungsmaterial 6 besteht allgemein aus einem festen, schmelzbaren Material. Bevorzugt wird als Phasenänderungsmaterial ein Metall, wie zum Beispiel Indium, eingesetzt. Die Schmelztemperatur von Indium liegt bei mehr als 157 °C. Eine Phasenänderung des Phasenänderungsmaterials 6 erfolgt somit lediglich bei Ansteuerung der Heizeinrichtung, nicht jedoch durch Sonneneinstrahlung oder Abwärme anderer Komponenten in der Nähe des Evakuierungsventils. Dies ist durch den ausreichend großen Temperaturunterschied zwischen Umgebungs-/Betriebstemperatur des Evakuierungsventils und der Phasenänderungstemperatur sichergestellt.

Ist die Heizeinrichtung 9 nicht in Betrieb, so behält das Phasenänderungsmaterial 6 seine feste Form. Durch die Inbetriebnahme der Heizeinrichtung 9 wird das Phasenänderungsmaterial 6 zum Schmelzen gebracht. In dem Gehäuse 2 ist zwischen dem Auslass 4 und dem Verschluss 5 ein Volumen 13 vorgesehen, in das das zum Schmelzen gebrachte Phasenänderungsmaterial fließen kann. Das Volumen 13 ist ein abgeschlossener Zwischenraum zwischen dem Auslass 4 und dem Verschluss 5. Der Auslass 4 umfasst einen Auslassstutzen 10, der in das Volumen 13 hineinragt. Zumindest außenumfangseitig umfasst der Auslassstutzen 10 ein oder mehrere Öffnungen 11, welche mit einem Ausgang 12 des Auslassstutzens 10 verbunden sind. Der Ausgang 12 steht mit der Umgebung oder einem anderen Leitungssystem oder Behälter in Verbindung.

Beim Aktivieren der Heizeinrichtung 9 wird das Phasenänderungsmaterial 6 verflüssigt und mittels eines einlassseitig herrschenden Restdrucks des technischen Systems aus den Durchgangskanälen 7 in das Volumen 13 gespült. Im stromabwärtsseitigen Volumen 13 setzt sich das geschmolzene Phasenänderungsmaterial 6 an dessen Boden 14 ab. Das abzulassende Fluid kann nun durch die Öffnungen 11 des Auslassstutzens 10 strömen, bis das technische System auf Umgebungsdruck ist.

Um bei nicht aktivierter Heizung, und damit nicht aktuiertem Evakuierungsventil eine Undichtigkeit des Evakuierungsventils 1 zu verhindern, sind die Durchgangskanäle 7, 8 derart ausgestaltet, dass das feste Phasenänderungsmaterial 6 dichtend an eine jeweilige Wand des Durchgangskanals 7, 8 gepresst wird. In dem in Fig. 1 gezeigten Ausführungsbeispiel weisen die Durchgangskanäle 7, 8 jeweils einen ersten, schmalen Abschnitt 7a, 8a sowie einen zweiten, im Vergleich breiteren Abschnitt 7b, 8b auf. Die hierbei gebildete Stufe 7c, 8c verhindert, dass das Phasenänderungsmaterial bei geschlossenem Ventil und großem Druck in dem technischen System aus den Durchgangskanälen 7, 8 gepresst werden kann. Im Gegenteil, je größer der Druck in dem technischen System und damit auf der Einlassseite des Evakuierungsventils 1 ist, desto besser wird das Phasenänderungsmaterial 6 an die Wände der Durchgangskanäle 7, 8 gepresst. Der gleiche Effekt kann erzielt werden, wenn die Durchgangskanäle 7, 8 eine konische Gestalt aufweisen.

Der Durchsatz des Mediums bei geöffnetem Evakuierungsventil 1 kann durch optional am Einlass 3 und/oder am Auslass 4 angeordnete Blenden begrenzt werden. Lediglich beispielhaft ist eine solche Blende 15 am Einlass 3 angeordnet. Hierdurch ergibt sich der gegenüber dem Einlassquerschnitt 3 verkleinerter Querschnitt 16. Soll eine Blende am Auslass 4 angeordnet werden, so kann diese am Ausgang 12 des Auslassstutzens 10 vorgesehen sein.

Soll das Evakuierungsventil 1 in Raumfahrtanwendungen zum Einsatz kommen, so ist es zweckmäßig, den Ausgang 12 des Auslassstutzens mit einem so genannten Zero-Force-Auslass 20 zu versehen, wie dieser beispielhaft in Fig. 2 dargestellt ist. Dieser kann beispielsweise mit einer Aufnahme 17 des Auslasses 4 verbunden werden. Prinzipiell ist es auch möglich, den Zero-Force-Auslass 20 einstückig mit dem Auslass 4 des Evakuierungsventils 1 auszubilden.

Der Zero-Force-Auslass 20 umfasst einen Verbindungsabschnitt 21, welcher in die Aufnahme 17 des Auslassrohes 4 gesteckt werden kann. Die Art der Verbindung (Kraft- und/oder Formschluss oder Stoffschluss) ist dabei von untergeordneter Bedeutung. Ein Einlass 22 ist dann strömungstechnisch mit dem Ausgang 12 des Auslassstutzens 10 verbunden. Von dem Verbindungsabschnitt 21 erstrecken sich in der Zeichnung beispielhaft zwei weitere Abschnitte 21 a, 21 b in entgegengesetzten Richtungen weg, so dass die jeweiligen Auslässe 23, 24 ein symmetrisches Entweichen des Fluids ermöglichen. Grundsätzlich kann die Anzahl der Auslässe 23, 24 auch anders gewählt sein. Es muss lediglich sichergestellt sein, dass ein symmetrisches Entweichen des Fluids sichergestellt ist, insbesondere bezüglich einer Längsachse des Evakuierungsventils, die sich in Fig. 1 in Blattebene von links nach rechts erstreckt. Hierdurch ist sichergestellt, dass kein Schubvektor bzw. kein Moment auftreten kann, der bzw. das auf das technische System wirkt.

Alternativ kann mit dem Auslass 12 eine Düse 30 verbunden werden. Die Düse 30, die in Fig. 3 dargestellt ist, umfasst einen Verbindungsabschnitt 31, der wiederum mit der Aufnahme 17 des Ausgangs 12 des Auslasses 4 verbunden werden kann. Die Verbindung kann lösbar verbindbar, kraft- und/oder formschlüssig oder stoffschlüssig ausgebildet sein. Ebenso könnte die Düse 30 integraler Bestandteil des Auslasses 4 sein. An einem dem Einlass 32 gegenüberliegenden Ende ist ein Auslass 33 mit einer Düsenerweiterung 34 vorgesehen.

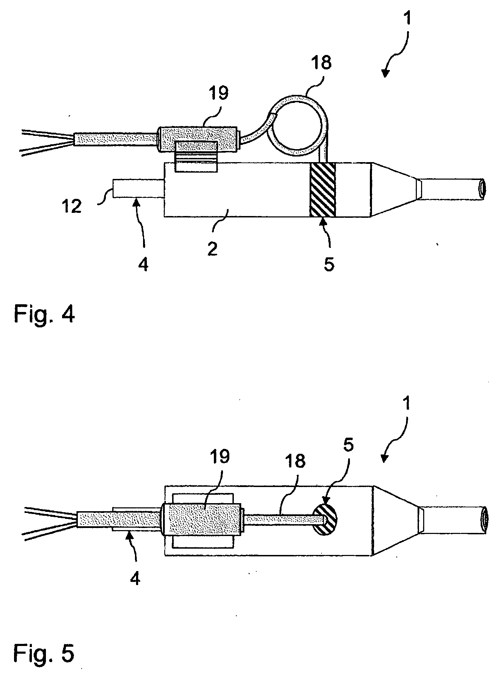

Wie oben beschrieben, wird der Verschluss 5 durch die Heizeinrichtung 9 erwärmt. Die Heizeinrichtung 9 befindet sich, wie aus Fig. 1 ersichtlich ist, in dem Verschluss in der Nähe des Phasenänderungsmaterials 6. Heizeinrichtungen dieser Art werden beispielsweise bei Hydrazin-Triebwerken eingesetzt. Die Heizeinrichtung 9 besteht aus dem Heizelement (H), einer Heizer-eigenen Zuleitung 18 und einem elektrischen Anschluss 19. Dies ist schematisch in den Figuren 4 und 5 dargestellt, wobei Fig. 4 eine Seitenansicht des erfindungsgemäßen Evakuierungsventils 1 und Fig. 5 die Anordnung von oben mit der Zuleitung 19 und dem elektrischen Anschluss 19 darstellt. In einer Schraffur dargestellt ist jeweils mit dem Bezugszeichen 5 versehen der Ort des Verschlusses 5 mit der darin befindlichen Heizeinrichtung 9.

Das beschriebene Evakuierungsventil weist den Vorteil geringer Kosten, einer Langlebigkeit, einer sicheren Funktion im Fall des Ansteuerns und einer geringen Komplexität aufgrund nicht vorhandener mechanischer Elemente auf.

### BEZUGSZEICHENLISTE

- 1: Evakuierungsventil
- 2: Gehäuse
- 2: erster Gehäuseabschnitt
- 2b: zweiter Gehäuseabschnitt
- 2c: Verbindungsabschnitt
- 3: Einlasse
- 4: Auslasse
- 5: Verschluss
- 6: Phasenänderungsmaterial
- 7: Durchgangskanal
- 7a: erster, schmaler Abschnitt des Durchgangskanals 7
- 7b: zweiter, breiter Abschnitt des Durchgangskanals 7
- 7c: Stufe
- 8: Durchgangskanal
- 8a: erster, schmaler Abschnitt des Durchgangskanals 8
- 8b: zweiter, breiter Abschnitt des Durchgangskanals 8
- 8c: Stufe
- 9: Heizeinrichtung
- 10: Auslassstutzen
- 11: Öffnung
- 12: Ausgang des Auslassstutzens
- 13: Volumen
- 14: Boden des Volumens
- 15: Blende
- 16: Querschnitt
- 17: Aufnahme für Blende, Düse oder Zero-Force-Auslass
- 18: Zuleitung
- 19: elektrischer Anschluss
- 20: Zero-Force-Auslass
- 21: Verbindungsabschnitt
- 21a: Abschnitt
- 21b: Abschnitt
- 22: Einlass
- 23: Auslass
- 24: Auslass
- 30: Düse
- 31: Verbindungsabschnitt
- 32: Einlass
- 33: Auslass
- 34: Düsenerweiterung

## Patentansprüche

1. Ventil zum einmaligen Öffnen einer Fluidleitung, insbesondere zum Entlüften eines technischen Systems, umfassend
- einen Einlass (3) zur Verbindung mit der Fluidleitung;
- einen Auslass (4);
- einen steuerbaren Verschluss (5), der zwischen dem Einlass (3) und dem Auslass (4) angeordnet ist und im nicht angesteuerten Zustand einen Durchgang zwischen dem Einlass (3) und dem Auslass (4) verschließt, wobei der Verschluss (5) ein Material (6) umfasst, welches in Abhängigkeit eines Ansteuerparameters seinen Phasenzustand ändert, wodurch im angesteuerten Zustand der Durchgang irreversibel geöffnet ist,
**dadurch gekennzeichnet, dass**
- der Auslass (4) einen Auslassstutzen (10) mit zumindest einer Öffnung (11) aufweist, wobei der Auslassstutzen (10) in ein zwischen dem Durchgang und dem Auslass (4) angeordnetes Volumen (13) des Ventils (1) ragt, wobei das durch Ansteuerung verflüssigte Material (6) durch das Volumen (13) aufnehmbar ist und die zumindest eine Öffnung (11) des Auslassstutzens (10) strömungstechnisch durch den Durchgang hindurch mit dem Einlass (3) verbunden ist.

2. Ventil nach Anspruch 1, bei dem die Phasenänderung des Materials (6) durch Wärmezufuhr herbeiführbar ist, wodurch das Material (6) unter Wärmezufuhr von einem festen in einen flüssigen Zustand übergeht.

3. Ventil nach Anspruch 1 oder 2, bei dem das Material (6) ein Metall, insbesondere Indium, umfasst oder aus einem Metall besteht.

4. Ventil nach einem der vorhergehenden Ansprüche, bei dem der Verschluss (5) eine Heizeinrichtung (9) umfasst, die zur Ansteuerung des Verschlusses (5) mittels einer Steuereinrichtung einschaltbar ist.

5. Ventil nach Anspruch, 4, bei dem die Heizeinrichtung (9) in dem Verschluss (5) in räumlicher Nähe zu dem Material (6) angeordnet ist.

6. Ventil nach einem der vorhergehenden Ansprüche, bei dem das Material (6) im nicht angesteuerten Zustand zumindest einen Durchgangskanal (7, 8) des Verschlusses (5) verschließt.

7. Ventil nach Anspruch 6, bei dem in einem Längsschnitt durch den Verschluss (5) bzw. das Ventil eine Wand des zumindest einen Durchgangskanals (7, 8) zumindest abschnittsweise konisch oder gestuft ausgebildet ist, so dass das Material (6) durch den im technischen System herrschenden Druck gegen die Wand gepresst wird.

8. Ventil nach einem der vorhergehenden Ansprüche, bei dem der Auslass (4) an seinem Ausgang (12) zur Verbindung mit einem Rohr ausgebildet ist.

9. Ventil nach einem der vorhergehenden Ansprüche, bei dem der Auslass (4) an seinem Ausgang (12) eine Düse umfasst.

10. Ventil nach einem der vorhergehenden Ansprüche, bei dem der Auslass (4) an seinem Ausgang (12) eine Mehrzahl an Auslässen (23, 24) umfasst, welche ein symmetrisches Entweichen des Fluids, insbesondere bezüglich einer Längsachse des Ventils, ermöglichen.

11. Ventil nach einem der vorhergehenden Ansprüche, bei dem zwischen dem Einlass (3) und dem Verschluss (5) eine Blende (15) zur Begrenzung des Fluiddurchsatzes angeordnet ist.

12. Ventil nach einem der vorhergehenden Ansprüche, bei dem zwischen dem Auslass (4) und dem Verschluss (5) eine Blende zur Begrenzung des Fluiddurchsatzes angeordnet ist.

13. Technisches System, insbesondere einer Raumfahrzeugkomponente, umfassend zumindest ein Evakuierungsventil (1) nach einem der vorhergehenden Ansprüche.

## Claims

1. Valve for the one-time opening of a fluid line, in particular for ventilating a technical system, comprising
- an inlet (3) for connection to the fluid line;
- an outlet (4);
- a controllable closure (5) which is arranged between the inlet (3) and the outlet (4) and, in the non-actuated state, closes a passage between the inlet (3) and the outlet (4), the closure (5) comprising a material (6) which changes its phase state in a manger which is dependent on an actuating parameter, as a result of which the passage is opener irreversibly in the actuated state,
**characterized in that**
- the outlet (4) has an outlet stub (10) with at least one opening (11), the outlet stub (10) protruding into a volume (13) of the valve (1), which volume (13) is arranged between the passage and the outlet (4), it being possible for the material (6) which is liquefied by way of actuation to be received by the volume (13), and the at least one opening (11) of the outlet stub (10) being connected in terms of flow to the inlet (3) through the passage.

2. Valve according to Claim 1, in which the phase change of the material (6) can be brought about by way of the addition of heat, as a result of which the material (6) passes from a solid into a liquid state under the addition of heat.

3. Valve according to Claim 1 or 2, in which the material (6) comprises a metal, in particular indium, or consists of a metal.

4. Valve according to one of the preceding claims, in which the closure (5) comprises a heating device (9) which can be switched on by means of a control device in order to actuate the closure (5).

5. Valve according to Claim 4, in which the heating device (9) is arranged in the closure (5) in spatial proximity to the material (6).

6. Valve according to one of the preceding claims, in which the material (6) closes at least one through channel (7, 8) of the closure (5) in the non-actuated state.

7. Valve according to Claim 6, in which, in a longitudinal section through the closure (5) or the valve, a wall of the at least one through channel (7, 8) is of conical or stepped configuration at least in sections, with the result that the material (6) is pressed against the wall by way of the pressure which prevails in the technical system.

8. Valve according to one of the preceding claims, in which the outlet (4) is configured with a tube for connection at its output (12).

9. Valve according to one of the preceding claims, in which the outlet (4) comprises a nozzle at its output (12).

10. Valve according to one of the preceding claims, in which the outlet (4) comprises, at its output (12), a plurality of outlets (23, 24) which make a symmetrical discharge of the fluid possible, in particular with regard to a longitudinal axis of the valve.

11. Valve according to one of the preceding claims, in which an orifice plate (15) for limiting the fluid throughput is arranged between the inlet (3) and the closure (5).

12. Valve according to one of the preceding claims, in which an orifice plate for limiting the fluid throughput is arranged between the outlet (4) and the closure (5).

13. Technical system, in particular of a spacecraft component, comprising at least one evacuation valve (1) according to one of the preceding claims.

## Revendications

1. Vanne pour l'ouverture une seule fois d'une conduite fluidique, en particulier pour le désaérage d'un système technique, comprenant
- une entrée (3) pour la connexion à la conduite fluidique ;
- une sortie (4) ;
- une fermeture commandable (5) qui est disposée entre l'entrée (3) et la sortie (4) et qui, dans l'état non commandé, ferme un passage entre l'entrée (3) et la sortie (4), la fermeture (5) comprenant un matériau (6) dont l'état de phase varice en fonction d'un paramètre de commande, de sorte que dans l'état commandé, le passage soit ouvert de manière irréversible.
**caractérisée en ce que**
- la sortie (4) présente une tubulure de sortie (10) avec au moins une ouverture (11), la tubulure de sortie (10) pénétrant dans un volume (13) de la vanne (1) disposé entre le passage et la sortie (4), le matériau (6) liquéfié par commande pouvant être reçu par le volume (13) et l'au moins une ouverture (11) de la tubulure de sortie (10) étant connectée à l'entrée (3) par une technique fluidique à travers le passage.

2. Vanne selon la revendication 1, dans laquelle la variation de phase du matériau (6) peut être provoquée par apport de chaleur, de sorte que le matériau (6) passe d'un état solide à un état fluide par apport de chaleur.

3. Vanne selon la revendication 1 ou 2, dans laquelle le matériau (6) comprend un métal, en particulier de l'indium ou se compose de métal.

4. Vanne selon l'une quelconque des revendications précédentes, dans laquelle la fermeture (5) comprend un dispositif de chauffage (9) qui peut être branché pour commander la fermeture (5) au moyen d'un dispositif de commande.

5. Vanne selon la revendication 4, dans laquelle le dispositif de chauffage (9) est disposé dans la fermeture (5) à proximité spatiale du matériau (6).

6. Vanne selon l'une quelconque des revendications précédentes, dans laquelle le matériau (6), dans l'état non commandé, ferme au moins un canal de passage (7, 8) de la fermeture (5).

7. Vanne selon la revendication 6, dans laquelle, en coupe longitudinale à travers la fermeture (5) ou la vanne, une paroi de l'au moins un canal de passage (7, 8) est réalisée au moins en partie sous forme conique ou étagée, de sorte que le matériau (6) soit pressé contre la paroi par la pression régnant dans le système technique.

8. Vanne selon l'une quelconque des revendications précédentes, dans laquelle la sortie (4) est réalisée au niveau de son extrémité de sortie (12) en vue de la connexion à un tuyau.

9. Vanne selon l'une quelconque des revendications précédentes, dans laquelle la sortie (4) comprend une buse au niveau de son extrémité de sortie (12).

10. Vanne selon l'une quelconque des revendications précédentes, dans laquelle la sortie (4) comprend au niveau de son extrémité de sortie (12) une pluralité de sorties (23, 24), qui permettent un échappement symétrique du fluide, en particulier par rapport à un axe longitudinal de la vanne.

11. Vanne selon l'une quelconque des revendications précédentes, dans laquelle entre l'entrée (3) et la fermeture (5) est disposé un diaphragme (15) pour limiter le débit de fluide.

12. Vanne selon l'une quelconque des revendications précédentes, dans laquelle entre la sortie (4) et la fermeture (5) est disposé un diaphragme pour limiter le débit de fluide.

13. Système technique, en particulier composant de vaisseau spatial, comprenant au moins une vanne d'évacuation (1) selon l'une quelconque des revendications précédentes.
